# EUROPÄISCHE PATENTSCHRIFT

(11) **EP 1 450 061 B1**
(45) Veröffentlichungstag und Bekanntmachung des Hinweises auf die Patenterteilung: **24.10.2007**
(21) Anmeldenummer: 03020921.7
(22) Anmeldetag: 16.09.2003
(51) Int. Cl.: F16D 48/06, F01P 7/04, F16D 35/02

(54) **Vorrichtung zur Regelung der Drehzahl des Abtriebdrehteils einer Viskositätskupplung**
Device for controlling the speed of the output part of a viscous fluid clutch
Dispositif de réglage de la vitesse de rotation de la pièce de sortie d'un embrayage à fluide visqueux

(30) Priorität: 19.02.2003 DE 10307106
(43) Veröffentlichungstag der Anmeldung: 25.08.2004
(73) Patentinhaber: BorgWarner Inc., Auburn Hills, MI 48326 (US)
(72) Erfinder: Buchholz, Thomas, 78333 Stockach (DE); Sorg, Wolfgang, 88263 Horgenzell (DE)
(74) Vertreter: Mussgnug, Bernd

(56) Entgegenhaltungen:
- DE-A- 10 023 911
- US-A- 6 079 536

## Beschreibung

Die Erfindung betrifft eine Vorrichtung zur Regelung der Drehzahl des Abtriebdrehteils einer Viskositätskupplung eines Kraftfahrzeug-Kühlsystems, insbesondere des Lüfters des Kühlsystems gemäß dem Oberbegriff des Anspruchs 1.

Bei Kraftfahrzeug-Kühlsystemen werden Viskositätskupplungen, das heißt Flüssigkeitsreibungskupplungen verwendet, um angetriebene Teile des Kühlsystems, insbesondere einen Lüfter an den Fahrzeugmotor anzukuppeln und durch diesen anzutreiben. Um die Drehzahl des Abtriebdrehteils der Viskositätskupplung, z.B. des Lüfters auf einem optimalen Wert zu halten, wird die der Viskositätskupplung zugeführte Menge der wirksamen Scherflüssigkeit über eine Stelleinheit, z.B. ein Ventil gesteuert.

Aus der US 6,079,536 ist es bekannt, die Drehzahl des Abtriebdrehteils der Viskositätskupplung mittels eines Reglers zu regeln, der der Stelleinheit ein Stellsignal zuführt, welches von einem gemessenen Ist-Drehzahlwert abhängt.

Der Erfindung liegt die Aufgabe zugrunde, eine Vorrichtung der eingangs genannten Gattung so zu verbessern, dass eine höhere Betriebssicherheit gewährleistet ist.

Diese Aufgabe wird erfindungsgemäß gelöst durch eine Vorrichtung mit den Merkmalen des Anspruchs 1.

Vorteilhafte Ausführungen der Erfindung sind in den Unteransprüchen angegeben.

Erfindungsgemäß wird die Drehzahl des Abtriebdrehteils der Viskositätskupplung zum einen in der bekannten Weise in einem Regelkreis (closed loop control) geregelt, wobei der gemessene Ist-Drehzahlwert auf einen vorgegebenen Soll-Drehzahlwert geregelt wird. Zusätzlich zu diesem Regelkreis kann die Drehzahl jedoch auch auf den vorgegebenen Soll-Drehzahlwert gesteuert werden (open loop control). Hierzu wird der Stelleinheit das Stellsignal über eine Schalteinheit zugeführt, die zwischen zwei Schaltstellungen umschaltbar ist. In der ersten Schaltstellung wird der Stelleinheit das Stellsignal des Reglers zugeführt, so dass die Drehzahl des Abtriebdrehteils auf den vorgegebenen Wert geregelt wird. In der zweiten Schaltstellung wird der Stelleinheit ein vorgegebenes Stellsignal zugeführt, so dass die Drehzahl auf den vorgegebenen Soll-Wert gesteuert wird, ohne dass eine Rückkopplung eines gemessenen Ist-Drehzahlwertes erfolgt. Die Schalteinheit schaltet automatisch in die zweite Schaltstellung um, wenn kein Ist-Drehzahlmesswert des Abtriebdrehteils vorliegt.

Durch die erfindungsgemäße Vorrichtung ergibt sich eine verbesserte Betriebssicherheit des Kühlsystems. Solange der Regelkreis störungsfrei arbeitet, wird die Drehzahl und damit die Kühlung des Systems auf den vorgegebenen optimalen Wert geregelt. Fällt der Ist-Drehzahlwert aus, z.B. weil der die Ist-Drehzahl messende Sensor defekt ist, so schaltet die Vorrichtung von der Regelung auf die Steuerung um, so dass eine weitere Funktion des Kühlsystems gewährleistet ist, auch wenn die optimalen Bedingungen nicht genau geregelt werden.

In vielen Anwendungsfällen, wie sie z.B. auch in der US 6,079,536 beschrieben sind, erfolgt eine kaskadierte Regelung der Viskositätskupplung. In einem ersten Temperaturregler wird aus der gemessenen Ist-Temperatur des Kühlsystems und den Betriebsbedingungen des Fahrzeugmotors eine Soll-Drehzahl berechnet. Ein nachgeschalteter Drehzahl-Regler regelt die Ist-Drehzahl des Abtriebdrehteils der Viskositätskupplung auf diese Soll-Drehzahl. In einer solchen Ausführung ergibt sich durch die Erfindung der zusätzliche Vorteil, dass die Berechnung der Soll-Drehzahl in dem Temperaturregler in gleicher Weise und mit derselben Software durchgeführt werden kann unabhängig davon, ob eine nachgeschaltete Drehzahl-Regelung erfolgt oder nicht. Ist eine Ist-Drehzahlmessung des Abtriebdrehteils der Viskositätskupplung bei dem Kraftfahrzeug-Kühlsystem vorhanden, so erfolgt eine Regelung der Drehzahl über den erfindungsgemäßen Regler. Weist das Kraftfahrzeugkühlsystem eine solche Ist-Drehzahlmessung nicht auf, so schaltet die Schalteinheit automatisch auf den Steuerbetrieb um und die Drehzahl wird auf den von der Temperatur-Regelung vorgegebenen Soll-Drehzahlwert gesteuert. Der Regelkreis bleibt dabei außer Funktion. Dadurch ergibt sich für den Motorenhersteller der Vorteil, dass dieselbe Vorrichtung und dieselbe Software verwendet werden können bei Viskositätskupplungen mit einer Ist-Drehzahlmessung und ohne eine solche Ist-Drehzahlmessung.

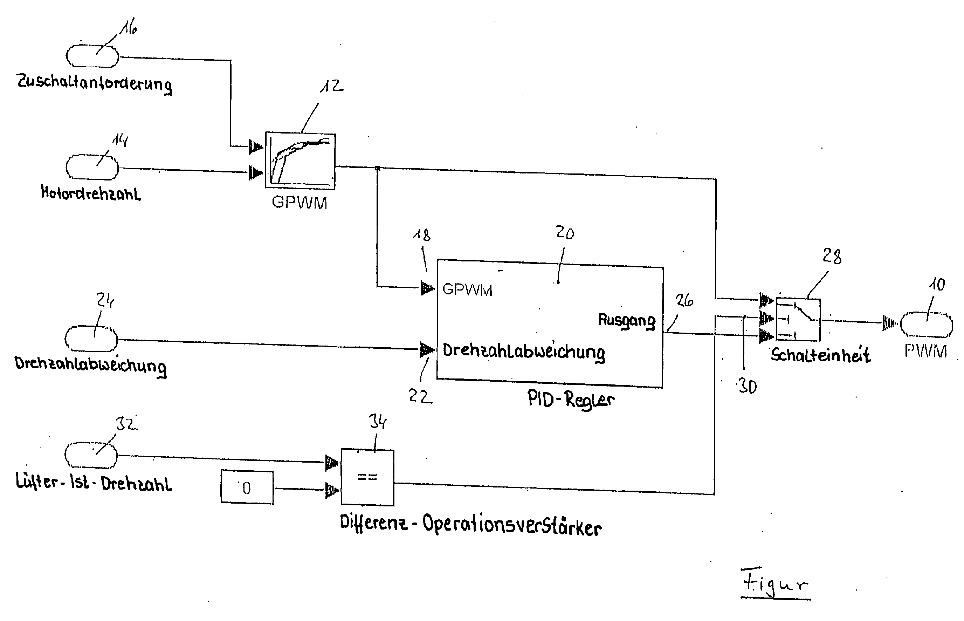

Im Folgenden wird die Erfindung anhand eines in der Zeichnung dargestellten Ausführungsbeispiels näher erläutert. Dabei zeigt die einzige Figur schematisch die Vorrichtung zur Regelung der Drehzahl des Abtriebdrehteils einer Viskositätskupplung.

Der Lüfter eines Kraftfahrzeug-Kühlsystems wird von dem Kraftfahrzeugmotor über eine Viskositätskupplung (Flüssigkeitsreibungskupplung) angetrieben. Die Drehzahl des Lüfters wird durch den Zuschaltgrad (engagement) der Viskositätskupplung geregelt. Hierzu wird über eine Stelleinheit, z.B. eine Ventileinheit die Menge der Scherflüssigkeit gesteuert, die dem Arbeitsraum der Viskositätskupplung zugeführt und damit wirksam wird. Die Stelleinheit wird durch ein Stellsignal 10 gesteuert, insbesondere durch ein pulsweitenmoduliertes getaktetes Signal PWM, um die Drehzahl auf die durch den Temperaturregler vorgegebene Solldrehzahl zu regeln.

Einem Steuerkennfeld 12 werden Motordaten, z.B. die Motordrehzahl 14 (input speed), und eine von dem Temperaturregler vorgegebene Zuschaltanforderung 16 (engagement demand) zugeführt. Anhand des gespeicherten Kennfeldes 12 wird aus diesen Größen ein pulsweitenmoduliertes Solldrehzahl-Stellsignal GPWM errechnet. Dieses Solldrehzahl-Stellsignal GPWM wird einem Eingang 18 eines schnellen Reglers 20 zugeführt, der als PID-Regler ausgebildet ist. Über einen weiteren Eingang 22 wird dem Regler 20 ein Drehzahl-Abweichungssignal 24 (error speed) zugeführt. Dieses Drehzahl-Abweichungssignal 24 entspricht der Regelabweichung der mittels eines Sensors gemessenen Ist-Drehzahl des Abtriebdrehteils der Viskositätskupplung von der Soll-Drehzahl GPMW. Der Regler 20 passt das zugeführte Stellsignal GPWM über seine P-, I-, D-Funktion solange an, bis die Regelabweichung (error speed) Null ist. Dieses angepasste Stellsignal gibt der Regler 20 über seinen Ausgang 26 als Stellsignal für die Stelleinheit aus.

Vor der Stelleinheit ist eine Schalteinheit 28 (switch) angeordnet, die zwei Schaltstellungen aufweist. In einer ersten Schaltstellung wird das von dem Ausgang 26 des Reglers 20 kommende Stellsignal der Stelleinheit zugeführt. In einer zweiten Schaltstellung, die in der Zeichnung eingezeichnet ist, wird das Solldrehzahl-Stellsignal GPWM des Steuerkennfeldes 12 über eine den Regler 20 überbrückende Bypass-Leitung direkt der Stelleinheit zugeführt.

Die Schalteinheit 28 wird über einen Steuereingang 30 zwischen der ersten Schaltstellung und der zweiten Schaltstellung umgeschaltet. Hierzu wird das durch den Sensor an dem Abtriebdrehteil der Viskositätskupplung gemessene Ist-Drehzahlsignal 32 (fan speed) einem Differenz-Operationsverstärker 34 (Rel. Operator) zugeführt. Der Differenz-Operationsverstärker 34 stellt durch Vergleich mit einem Null-Pegel fest, ob ein Ist-Drehzahlsignal 32 vorhanden ist oder nicht. Ist das Ist-Drehzahlsignal 32 vorhanden, so schaltet der Differenz-Operationsverstärker 34 die Schalteinheit 28 in die erste Schaltstellung, so dass der geschlossene Regelkreis des Reglers 20 wirksam wird, der die Drehzahl des Abtriebdrehteils der Viskositätskupplung auf die Solldrehzahl GPWM regelt. Stellt der Differenz-Operationsverstärker 34 kein Ist-Drehzahlsignal 32 fest, so schaltet der Differenz-Operationsverstärker 34 die Schalteinheit 28 auf die zweite Schaltstellung um, in welcher der Regler 20 überbrückt wird und die Stelleinheit entsprechend der Soll-Drehzahl GPWM des Steuerkennfeldes 12 gesteuert wird.

Weist die Viskositätskupplung einen Sensor zur Messung der Drehzahl ihres Abtriebdrehteils auf, so kann die Drehzahl über den geschlossenen Regelkreis des Reglers 20 auf den vorgegebenen Sollwert geregelt werden. Fällt der Sensor aus, so schaltet die Vorrichtung automatisch um und steuert die Drehzahl der Viskositätskupplung auf den vorgegebenen Solldrehzahlwert. Wird mit der Vorrichtung eine Viskositätskupplung angesteuert, die keinen Sensor zur Messung der Ist-Drehzahl des Abtriebdrehteils der Viskositätskupplung aufweist, so steht kein Ist-Drehzahlsignal 32 an und die Vorrichtung arbeitet automatisch ohne den Regelkreis des Reglers 20.

## Patentansprüche

1. Vorrichtung zur Regelung der Drehzahl des Abtriebdrehteils einer Viskositätskupplung eines Kraftfahrzeug-Kühlsystems, insbesondere des Lüfters des Kühlsystems, mit einer Stelleinheit, die die der Viskositätskupplung zugeführte wirksame Flüssigkeitsmenge entsprechend einem Stellsignal steuert, und mit einem Regler (20), der der Stelleinheit ein Stellsignal in Abhängigkeit von der Regelabweichung eines gemessenen Ist-Drehzahlwertes (32) von einem Soll-Drehzahlwert zuführt,
**dadurch gekennzeichnet, dass** der Stelleinheit das Stellsignal (10) über eine Schalteinheit (28) zugeführt wird, die zwischen einer ersten Schaltstellung, in welcher das Stellsignal des Reglers (20) zugeführt wird, und einer zweiten Schaltstellung umschaltbar ist, in welcher ein Soll-Stellsignal (GPWM) zugeführt wird, und dass die Schalteinheit (38) automatisch von der ersten Schaltstellung in die zweite Schaltstellung umgeschaltet wird, wenn kein gemessener Ist-Drehzahlwert (32) vorliegt.

2. Vorrichtung nach Anspruch 1,
**dadurch gekennzeichnet, dass** ein Steuerkennfeld (12) anhand von Betriebsdaten (14, 16) des Kraftfahrzeuges ein Solldrehzahl-Stellsignal (GPWM) berechnet, dass dieses Solldrehzahl-Stellsignal (GPWM) einerseits dem Regler (20) und anderseits über die Schalteinheit (28) in deren zweiter Schaltstellung direkt der Stelleinheit zugeführt wird.

3. Vorrichtung nach Anspruch 1 oder 2,
**dadurch gekennzeichnet, dass** ein Operationsverstärker (34) das Vorhandensein oder Fehlen des Ist-Drehzahlsignals (32) feststellt und die Schalteinheit (28) entsprechend umschaltet.

## Claims

1. Device for regulating the rotational speed of the drive output rotary part of a viscous coupling of a motor vehicle cooling system, in particular of the fan of the cooling system, having an actuating unit which controls the effective liquid quantity supplied to the viscous coupling corresponding to an actuating signal, and having a regulator (20) which supplies an actuating signal to the actuating unit as a function of the regulating deviation of a measured actual rotational speed value (32) from a nominal rotational speed value,
**characterized in that** the actuating signal (10) is supplied to the actuating unit via a switching unit (28) which is switchable between a first switching position, in which the actuating signal of the regulator (20) is supplied, and a second switching position, in which a nominal actuating signal (GPWM) is supplied, and **in that** the switching unit (28) is switched automatically from the first switching position into the second switching position if no measured actual rotational speed value (32) is present.

2. Device according to Claim 1,
**characterized in that** a control characteristic diagram (12) calculates a nominal rotational speed actuating signal (GPWM) on the basis of operating data (14, 16) of the motor vehicle, that said nominal rotational speed actuating signal (GPWM) is supplied on the one hand to the regulator (20) and on the other hand via the switching unit (28) in its second switching position directly to the actuating unit.

3. Device according to Claim 1 or 2,
**characterized in that** an operational amplifier (34) determines the presence or absence of the actual rotational speed signal (32) and switches the switching unit (28) correspondingly.

## Revendications

1. Dispositif de réglage de la vitesse de rotation de la pièce de sortie d'un embrayage à fluide visqueux d'un système de refroidissement de véhicule automobile, notamment du ventilateur du système de refroidissement, avec une unité de réglage qui commande en fonction d'un signal de réglage la quantité effective de liquide apportée à l'embrayage à fluide visqueux, et avec un régulateur (20) qui fournit à l'unité de réglage un signal de réglage en fonction de l'écart de régulation d'une valeur réelle mesurée (32) de vitesse de rotation par rapport à une valeur de consigne de vitesse de rotation,
**caractérisé en ce que** le signal de réglage (10) est apporté à l'unité de réglage par l'intermédiaire d'une unité de commutation (28) qui peut être commutée en une première position de commutation dans laquelle on apporte le signal de réglage du régulateur (20) et une deuxième position de commutation dans laquelle on apporte un signal de réglage de consigne (GPWM), et **en ce que** l'unité de commutation (28) est commutée automatiquement de la première position de commutation dans la deuxième position de commutation en l'absence de valeur réelle mesurée (32) de vitesse de rotation.

2. Dispositif selon la revendication 1, **caractérisé en ce qu'**un diagramme caractéristique de commande (12) calcule un signal de réglage (GPWM) de vitesse de rotation de consigne à l'aide de paramètres de fonctionnement (14, 16) du véhicule automobile, et **en ce que** ce signal de réglage (GPWM) de vitesse de rotation de consigne est apporté d'une part au régulateur (20) et d'autre part, via l'unité de commutation (28) dans sa deuxième position de commutation, directement à l'unité de réglage.

3. Dispositif selon la revendication 1 ou 2, **caractérisé en ce qu'**un amplificateur opérationnel (34) établit la présence ou l'absence du signal (32) de vitesse réelle de rotation et commute l'unité de commutation (28) en conséquence.
